# EUROPÄISCHE PATENTSCHRIFT

(11) **EP 4 151 066 B1**
(45) Veröffentlichungstag und Bekanntmachung des Hinweises auf die Patenterteilung: **20.08.2025**
(21) Anmeldenummer: 21212631.2
(22) Anmeldetag: 06.12.2021
(51) Int. Cl.: A01C 1/04

(54) **VERFAHREN UND VORRICHTUNG ZUM ANORDNEN VON SAATGUT**
METHOD AND DEVICE FOR ARRANGING SEEDS
PROCÉDÉ ET DISPOSITIF DE LOCALISATION DES SEMENCES

(30) Priorität: 15.09.2021 EP 21196994
(43) Veröffentlichungstag der Anmeldung: 22.03.2023
(73) Patentinhaber: Wolff, Antje, 23669 Timmendorfer Strand (DE)
(72) Erfinder: Wolff, Antje, 23669 Timmendorfer Strand (DE)
(74) Vertreter: Dehns Germany Partnerschaft mbB

(56) Entgegenhaltungen:
- WO-A1-00/00007
- WO-A1-2007/065436
- US-A- 4 910 911
- US-A- 5 101 594
- US-B1- 6 240 674

## Beschreibung

Die vorliegende Erfindung betrifft ein Verfahren und eine Vorrichtung zum Anordnen von Saatgut. Ein derartiges Anordnen, bei dem insbesondere eine Anzahl unterschiedlicher Samen unter vergleichbaren Bedingungen nebeneinander positioniert werden, ist im Zusammenhang mit der Überprüfung der Keimfähigkeit des Saatguts bzw. der Samen von Bedeutung.

Zur Untersuchung, insbesondere zur vergleichenden Untersuchung der Eigenschaften von Saatgut, ist eine Bereitstellung gleichförmiger Wachstumsbedingungen für einzelne Pflanzensamen vorteilhaft. Unter gleichförmigen Wachstumsbedingungen werden insbesondere gleiche Temperatur, gleiche Feuchtigkeit, aber auch gleiche räumliche Verhältnisse verstanden.

Auf der Grundlage einer derartigen vergleichenden Untersuchung kann in effektiver Weise eine Beurteilung, beispielsweise von Keimungseigenschaften des Saatguts und/oder von sich aus dem Saatgut entwickelnden Keimlingen unter Berücksichtigung beispielsweise zeitpunktbezogener phänotypischer Merkmale, durchgeführt werden.

Die EP 2 525 641 A1 beschäftigt sich mit Verfahren und Vorrichtungen zur Beurteilung von Keimungseigenschaften von Pflanzensamen. Hier wird die Phänotypisierung von Samen und sich aus ihnen entwickelnden Keimpflanzen mittels 3D-Röntgencomputertomographie erläutert. Um derartige Verfahren standardisiert und wirksam durchführen zu können, müssen die Samen in einem standardisierten Keimmedium eingekeimt werden. Dieses ist im Allgemeinen als Keimpapier ausgebildet, das in planarer oder plissierter bzw. gefalteter Form normalerweise horizontal in Keimgefäße gelegt wird. Hierbei können sich jedoch bei den sich aus dem Saatgut entwickelnden Keimpflanzen die Wurzeln nicht, dem natürlichen Geotropismus entsprechend, nach unten in Richtung des Erdmittelpunktes entwickeln, sondern werden gezwungen, waagerecht zu wachsen.

Die WO00/00007 A1 offenbart eine Vorrichtung und ein Verfahren zum Anordnen von Saatgut an einem Keimpapier, wobei das Keimpapier lotrecht oder schräg ausgerichtet wird und das Saatgut auf einer Zwischenhöhe des Keimpapiers angeordnet wird. Weiterer relevanter Stand der Technik ist aus der US 5101594 A, der US 4910911 A, der US 6240674 B1 und der WO 2007/065436 A1 bekannt.

Es ist auch bekannt, Saatgut zwischen zwei Blättern Keimpapier oder einem Blatt, das längs geknickt wird, anzuordnen, und diese beiden Blätter oder Hälften eines Papieres anschließend mit den darin angeordneten Samen zu einer Rolle zusammenzurollen, so dass das Saatgut auch bei lotrecht aufgestellter Rolle nicht nach unten verrutschen kann. Nachteilig hierbei ist, dass ein zum Teil starker Druck auf die einzelnen Samen ausgeübt wird bzw. werden kann, der die natürliche Keimfähigkeit behindert. Auch kann hierbei nicht gewährleistet werden, dass der Druck bzw. die Verpressung auf unterschiedliche Samen gleich groß ist, so dass insgesamt keine gleichförmigen Wachstumsbedingungen garantiert werden können, wodurch der objektive Vergleich von Samen erschwert ist.

Saatgut muss, auch um gesetzlichen Anforderungen bei der Saatgutprüfung zu genügen, bestimmte Mindestqualitätsmerkmale besitzen, um einen hinreichenden Aufgang und Aufwuchs im Feld zu gewährleisten. Die Qualität des Saatguts ist mitentscheidend, dass sich die jeweiligen genotypischen Ertrags- und Qualitätsmerkmale ausbilden können.

Ziel der Saatgutforschung und -entwicklung ist unter anderem die bestmögliche Sicherung eines frühen, hohen und einheitlichen Aufgangs, einer hohen Aufgangsgeschwindigkeit, einer guten Wuchsleistung und einer hohen Stresstoleranz. Hierdurch soll unter anderem eine möglichst große Einheitlichkeit des Aufwuchses, das heißt der sich entwickelnden Pflanzen und der Pflanzen bei Erntereife, sowie ein quantitativ und qualitativ hoher und einheitlicher Ertrag erzielt werden.

Aus den genannten Gründen ist ein Vergleich der entsprechenden Eigenschaften unterschiedlicher Samen des gleichen Saatguts, sowie auch der Vergleich unterschiedlicher Saatgutpartien wesentlich. Die einzelnen Samen werden hierbei typischerweise in angefeuchtetem Filterpapier definierter Qualität, in so genanntem Keimpapier, unter kontrollierten Feuchtigkeits- und Temperaturbedingungen über einen bestimmten Zeitraum eingekeimt. Nach diesem Zeitraum erfolgt ein manuelles bzw. visuelles Auszählen der gekeimten Samen, sowie gegebenenfalls eine weitergehende Beurteilung der Keimungseigenschaften, wie sie zum Beispiel in der EP 2 525 641 A1 beschrieben ist.

Die vorliegende Erfindung strebt an, in möglichst einfacher Weise derartige optimale und identische Wachstumsbedingungen für eine Vielzahl von zu untersuchenden Pflanzensamen zu ermöglichen.

Dieses Ziel wird erreicht mit einer Vorrichtung mit den Merkmalen des Patentanspruchs 1, sowie einem Verfahren mit den Merkmalen des Patentanspruchs 6.

Es sei darauf hingewiesen, dass die Schritte des erfindungsgemäßen Verfahrens in beliebiger Reihenfolge ausgeführt werden können. So kann zunächst ein lotrechtes oder aufrechtes Ausrichten des Keimpapiers vorgenommen werden, und anschließend das Saatgut auf der Zwischenhöhe des Keimpapiers angeordnet werden. Es ist gleichfalls möglich, und ebenfalls vom erfindungsgemäßen Verfahren umfasst, das Saatgut während einer beispielsweise noch horizontalen oder liegenden Ausrichtung des Keimpapiers auf der Zwischenhöhe anzuordnen, und das Keimpapier erst anschließend vertikal auszurichten bzw. aufzustellen, wobei das Saatgut auf der Zwischenhöhe gehalten wird bzw. verbleibt. Der Begriff "lotrecht", wie er im Rahmen der Darstellung der vorliegenden Erfindung verwendet wird, soll insbesondere eine Richtung parallel zur Gravitationsrichtung, aber auch Richtungen mit einer Neigung bzw. Abweichung von bis zu etwa 10 Grad oder 5 Grad relativ zur Gravitationsrichtung umfassen. Der Begriff "schräg", wie er im Rahmen der Darstellung der vorliegenden Erfindung verwendet wird, soll insbesondere Richtungen mit einer Neigung von etwa 10 Grad bis etwa 45 Grad relativ zur Gravitationsrichtung umfassen. Auch größere Winkel relativ zu Gravitationsrichtung sind denkbar.

Der Begriff "Keimpapier" umfasst insbesondere einen einzigen, aber auch eine Vielzahl von Keimpapierblättern bzw. -bögen. Einige der bevorzugten Ausführungsformen der Erfindung sind insbesondere unter Verwendung eines einzigen Bogens plissierten Keimpapieres realisierbar, in dessen vertikal aufgestellten Falten die Samen zwischen dem Papier gehalten werden, während bei andere Ausführungsformen auch die gleichzeitige Verwendung mehrerer Bögen zweckmäßig sein kann.

Erfindungsgemäß ist gewährleistet, dass die Keimpflanzen so natürlich wie möglich wachsen können, da sie dem natürlichen Geotropismus folgen, wobei der Keimling bzw. Spross nach oben und die Wurzeln sich nach unten (insbesondere zum Erdmittelpunkt hin) wachsend, entwickeln können. Insbesondere die Bereitstellung von lotrecht ausgerichtetem, plissiertem Keimpapier mit leicht geöffneten Falten ermöglicht es, das Saatgut derart zu halten, dass es in seiner natürlichen Entwicklung weder durch Druck des Papieres noch durch dessen horizontale Ausrichtung in seiner natürlichen Entwicklung behindert wird. Hierbei ist auch der Flächenbedarf gegenüber herkömmlichen Lösungen, bei denen Keimpapier im Wesentlichen horizontal ausgerichtet ist, verringert.

Erfindungsgemäß kann sichergestellt werden, dass eine Vielzahl gleichzeitig zu untersuchender Samen alle auf der gleichen Zwischenhöhe des lotrecht oder schräg ausgerichteten Keimpapiers angeordnet und dort sicher gehalten werden können. Insbesondere können die Samen nicht verrutschen oder gar von ihrer vertikalen Höhe bzw. Position herunterfallen. Gleichzeitig werden sie nur minimal bzw. so wenig wie möglich eingeengt, so dass alle Samen unabhängig von ihrer Größe die gleichen Bedingungen für einen ungestörten, druckfreien Keimvorgang und eine stressfreie Keimlingsentwicklung zur Verfügung gestellt bekommen. Als besonders vorteilhaft erweist sich, dass dieses verrutschsichere sowie gleichmäßige und verpressfreie Keimbedingungen bereitstellende Anordnen von Saatgut an lotrecht oder schräg aufgestelltem Keimpapier unter Verwendung nur eines einzigen Blattes Keimpapier bewerkstelligbar ist.

Vorteilhafte Ausgestaltungen der Erfindung sind Gegenstand der Unteransprüche.

Erfindungsgemäß wird das Anordnen des Saatguts auf einer Zwischenhöhe des Keimpapiers unter Verwendung eines sich auf dem Keimpapier auf bzw. im Bereich der Zwischenhöhe angebrachten Haltestreifens bewerkstelligt. Ein derartiger Haltestreifen ist insbesondere als schmaler Streifen aus feinem Vliespapier ausgebildet. Er erstreckt sich zweckmäßigerweise über die gesamte Breite des Keimpapiers. Dieses Keim- oder Filterpapier kann ohne oder mit Falten ausgebildet sein, wie weiter unten erläutert wird. Der Haltestreifen erstreckt sich bevorzugt im Wesentlichen parallel zur Oberkante bzw. Unterkante des Keimpapiers, wobei auch eine schräge Anordnung relativ zur Oberkante bzw. Unterkante denkbar ist. Der Haltestreifen ist so ausgebildet, dass sehr feines Saatgut dort wie in einer Tasche locker gegen Verrutschen, insbesondere gegen Verrutschen nach unten, gehalten wird, sodass kein Druck oder mechanischer Stress auf das Saatgut, der die Keimung beeinträchtigen könnte, entsteht. Diese Ausführungsform erfordert nur ein einziges Blatt Keimpapier.

Eine Fixierung des Haltestreifens auf dem Keimpapier erfolgt vorteilhafterweise derart, dass der aus feinem Vlies bestehende Haltestreifen nur punktuell, beispielsweise in regelmäßigen Abständen an Verbindungsstellen, am Keimpapier fixiert wird, so dass aus dem Saatgut entstehende Keimwurzeln durch die Zwischenräume zwischen diesen punktuellen Fixierungen nach unten durchwachsen können

Diese Fixierung kann vorteilhafterweise durch Aufnähen des Vliesstreifens oder Verwendung einer Rändeltechnik, dem sogenannten Embossing, erfolgen, bei der zwei unterschiedliche Lagen von Papier, nämlich das Keimpapier und das Vliespapier des Haltebandes, durch extrem starke Verprägung ohne Kleber aneinander geheftet werden. Die Wahl der Nahttechnik oder der Rändeltechnik wird sich typischerweise danach richten, welche Form die geringste Beeinträchtigung des Wuchsverhaltens des Saatguts erwarten lässt. Mittels dieser beiden Techniken sind in einfacher Weise die gewünschten Verbindungsstellen und Zwischenräume realisierbar.

Zweckmäßigerweise weist der Haltestreifen eine Oberkante und eine Unterkante auf, wobei der Haltestreifen im Bereich seiner Unterkante an zueinander beabstandeten Verbindungsstellen unter Bereitstellung von zur Unterkante des Keimpapiers hin offenen Zwischenräumen mit dem Keimpapier verbunden ist. Auch andere Ausführungen als parallel zur Kante des Haltestreifens angeordnete Verbindungsstellen, insbesondere als eine parallel zur Kante des Haltestreifens verlaufende Naht oder Heftlinie, sind denkbar.

Erfindungsgemäß wird das Anordnen des Saatguts auf einer Zwischenhöhe des Keimpapiers unter Verwendung einer sich entlang dem Keimpapier auf der Zwischenhöhe erstreckenden Halteschiene bewerkstelligt. Eine derartige Halteschiene ist zweckmäßigerweise derart ausgebildet, dass ein sicheres Halten des Saatguts mittels des Keimpapiers auf der Zwischenhöhe möglich ist, wobei das Saatgut lediglich mit dem Keimpapier in Berührung steht, und wobei gleichzeitig die Keime des Saatguts von der Zwischenhöhe aus nach oben, und die Wurzeln des Saatguts von der Zwischenhöhe aus nach unten wachsen können.

Eine derartige Halteschiene kann insbesondere biegsam, beispielsweise aus einem biegsamen Kunststoff ausgebildet sein. Hierdurch kann die Halteschiene an verschiedene Biegezustände bzw. Orientierungen des Keimpapiers angepasst werden. Beispielsweise kann das Keimpapier zur Bereitstellung einer Zylinderform aufgerollt werden, wobei in diesem Fall die Halteschiene eine entsprechende Ringform einnehmen kann. Die Halteschiene kann auch zu einer Spiralform aufgerollt werden, wodurch sie zur Anordnung von Saatgut an einem entsprechend spiralförmig aufgerollten Keimpapier dienen kann.

Gemäß einer besonders bevorzugten Ausführungsform der Erfindung weist das Keimpapier eine Vielzahl von Falten auf, die sich parallel zueinander von der Oberkante zur Unterkante des Keimpapiers erstrecken. Bei lotrechter Aufstellung bzw. Orientierung des Keimpapiers verlaufen diese Falten entsprechend lotrecht, bei schräger Aufstellung entsprechend schräg.

Mittels derartiger Falten kann in einfacher Weise mit einem Bogen Keimpapier eine Vielzahl von einzelnen Bereichen für die Keimung jeweiliger Samen zur Verfügung gestellt werden. Der oben erwähnte, bevorzugt aus Vliespapier hergestellte Haltestreifen passt sich bevorzugt dieser Faltenstruktur an. Beispielsweise kann ein Haltestreifen auf ein noch planares Keimpapier aufgebracht und hierauf fixiert werden, wonach das Keimpapier zusammen mit dem darauf angebrachten Halteband zur Bereitstellung der Vielzahl von Falten gefaltet wird. Ein derartiger Verbund aus Keimpapier und Haltestreifen kann auch zusammen mit einer wie oben erläuterten Halteschiene verwendet werden

Gemäß einer besonders bevorzugten Ausführungsform ist die Halteschiene mäanderförmig mit einer Vielzahl von Schlingen und zwischen den jeweiligen Schlingen ausgebildeten Verbindungsbereichen ausgebildet. Zweckmäßigerweise entspricht hierbei die Anzahl der Schlingen der Anzahl der Falten des Keimpapiers, sodass eine Schlinge in jede Falte des Keimpapiers eingreifen kann.

Die Verbindungsbereiche und die Schlingen dienen hierbei zum Fixieren der Falten des Keimpapiers von außen in einer bestimmten Position, wobei je nach Dimensionierung der Verbindungsbereiche und der Schlingen und/oder ihrer Orientierung relativ zueinander die Größe, also die Breite und Tiefe, oder mit anderen Worten der Öffnungswinkel der einzelnen Falten auf oder im Bereich der Zwischenhöhe eingestellt werden kann. Im Bereich dieser Halteschiene, also im Wesentlichen auf der Zwischenhöhe, werden die an sich leicht geöffneten Falten bevorzugt sanft durch die Schlingen des Halteringes zusammengedrückt. Hierdurch ist in wirksamer Weise oberhalb dieser relativen Verengung der Falte eine Ablagestelle für das Saatgut hergestellt, auf der es ohne Verpressung, und ohne Berührung der Halteschiene gehalten wird. Gleichzeitig hat die Wurzel des Saatguts die Möglichkeit, durch die mit Hilfe der Halteschiene verengte Stelle des Keimpapieres nach unten zu wachsen, während der Keimling sich in der offenen Falte nach oben frei entwickeln kann. Die Halteschiene stellt somit eine Taillierung der Falten im Bereich der Zwischenhöhe zur Verfügung, auf welche das Saatgut verrutschsicher angeordnet werden kann, wobei oberhalb und unterhalb der Zwischenhöhe die Falte ihre ursprünglichen Maße, also Breite und Tiefe, einnehmen kann.

Die oben beschriebenen Ausführungsformen dienen insbesondere dazu, Saatgut an einem einzigen Blatt Keimpapier zu fixieren. Es ist auch vorteilhaft möglich Halteschienen auszubilden, die derart geformt sind, dass sie zum Beispiel zwei lotrecht bzw. vertikal oder schräg orientierte und parallel zueinander angeordnete Blätter aus Keimpapier auf einer Zwischenhöhe unter Bereitstellung eines schmalen Spaltes aneinander fixieren, so dass Saatgut zwischen den beiden Blättern und ohne die Haltescheine zu berühren auf diesem Spalt positioniert werden kann, ohne durch diesen durchzufallen. Hierbei haben wiederum aus dem Saatgut sich entwickelnde Wurzeln die Möglichkeit, durch den Spalt hindurch ohne Behinderung nach unten, und die Sprosse vom Saatgut aus nach oben zu wachsen. Eine derartige Halteschiene kann insbesondere als rahmenförmiges, insbesondere rechteckiges oder gekrümmtes Profil ausgebildet sein, dessen Länge der entsprechenden horizontalen Erstreckung der verwendeten Bögen aus Keimpapier, und dessen Breite der kumulierten Dicke von zwei Blättern Keimpapier zuzüglich der gewünschten Spaltbreite entspricht. Ein derartiges Profil kann in einfacher Weise auf zwei Blätter aus Keimpapier aufgeschoben werden, oder, mit anderen Worten, zwei Blätter Keimpapier können in ein derartiges Profil eingeschoben werden.

Die erfindungsgemäße Vorrichtung weist einen Behälter mit einer Behälterwand auf, welcher eine Oberkante und eine Unterkante mit einem lotrechten Abstand H zueinander aufweist, wobei sich in einem Bereich entlang der Innenseite der Behälterwand ein Keimpapier erstreckt. Es ist ferner eine Trageeinrichtung vorgesehen, welche derart mit dem Keimpapier zusammenwirkt, dass das Saatgut auf oder oberhalb einer Zwischenhöhe oberhalb der Unterkante und unterhalb der Oberkante der Behälterwand derart an dem Keimpapier getragen wird, dass Keime des Saatguts von der Zwischenhöhe aus nach oben, und Wurzeln des Saatguts von der Zwischenhöhe aus nach unten wachsen können. "An dem Keimpapier getragen" bedeutet insbesondere, dass das Saatgut ausschließlich mit dem Keimpapier in Berührung steht, dass also die Halteeinrichtung auf das Keimpapier wirkt, und das Saatgut aufgrund dieser Wirkung an dem lotrecht ausgerichteten Keimpapier gehalten bzw. fixiert ist. Dies ist insbesondere bei der bereits erwähnten Halteschiene der Fall. Es ist jedoch auch möglich, dass, beispielsweise im Falle des ebenfalls erwähnten Haltestreifens, das Saatgut mit der Halteeinrichtung in Berührung steht.

Zweckmäßigerweise ist der Behälter zylinderförmig, konisch oder polygonal ausgebildet. An einen derartig ausgebildeten Behälter kann ein Keimpapier in besonders einfacher Weise durch entsprechendes Verbiegen angepasst werden. Zylinderförmig oder konisch ausgebildete Behälter, bei denen Saatgut kreisförmig entlang des Umfangs auf der Zwischenhöhe angeordnet ist, eignen sich besonders gut für eine 3D-Röntgenanalyse des Saatguts Auch Behälter mit polygonalem Querschnitt können verwendet werden, wobei insbesondere Behälter mit viereckigem, insbesondere quadratischem oder rechteckigem Querschnitt erwähnt seien. Bei gewünschter schräger Ausrichtung eines Keimpapiers eignen sich insbesondere mit einer entsprechend schräg verlaufenden Behälterwand ausgebildete Behälter, wobei auch in diesem Fall zylinderförmige Behälter einsetzbar sind. Bei gewünschter lotrechter Ausrichtung eines Keimpapiers eignen sich sowohl zylinderförmige als auch konische Behälter.

Gemäß einer bevorzugten Ausführungsform weist das Keimpapier eine Vielzahl von lotrecht oder schräg sich erstreckenden Falten auf. Unter "lotrecht" wird bzw. werden, wie bereits ausgeführt, insbesondere eine Richtung parallel zur Gravitationsrichtung, aber auch Richtungen mit einer Neigung von bis zu etwa 10 Grad oder 5 Grad relativ zur Gravitationsrichtung verstanden. Unter "schräg" werden insbesondere, wie erwähnt, Neigungen bis etwa 45 Grad relativ zur Gravitationsrichtung verstanden

Als Trageinrichtung sind, wie bereits erwähnt, erfindungsgemäßein sich auf der gewählten Zwischenhöhe erstreckendes Halteband, oder eine Halteschiene vorgesehen, wobei Halteband und Halteschiene jeweils allein oder auch in Kombination vorgesehen sein können.

Zweckmäßigerweise ist die Halteschiene biegsam und/oder mäanderförmig mit einer Vielzahl von Schlingen und zwischen den jeweiligen Schlingen vorgesehenen Verbindungsbereichen ausgebildet.

Gemäß einer besonders bevorzugten Ausführungsform entspricht die Anzahl der Schlingen der Halteschiene der Anzahl der Falten. Die Breite der Verbindungsbereiche entspricht dem gewünschten Abstand der Falten zueinander und der lichte Abstand der Mäanderschlingen zueinander dem gewünschten Grad der Faltenverengung.

Die Erfindung wird nun anhand der beigefügten Zeichnung weiter erläutert. In dieser zeigt
Figur 1 die wesentlichen Komponenten einer ersten bevorzugten Ausführungsform der erfindungsgemäßen Vorrichtung vor ihrer Zusammenfügung,
Figur 2 in schematischer Draufsicht die erste bevorzugte Ausführungsform der erfindungsgemäßen Vorrichtung in zusammengebautem Zustand,
Figur 3 in schematischer Seitenansicht die erste bevorzugte Ausführungsform der erfindungsgemäßen Vorrichtung,
Figur 4 in seitlicher schematischer Ansicht eine zweite bevorzugte Ausführungsform der erfindungsgemäßen Vorrichtung, und
Figur 5 eine teilweise schematische Draufsicht der zweiten bevorzugten Ausführungsform der erfindungsgemäßen Vorrichtung.

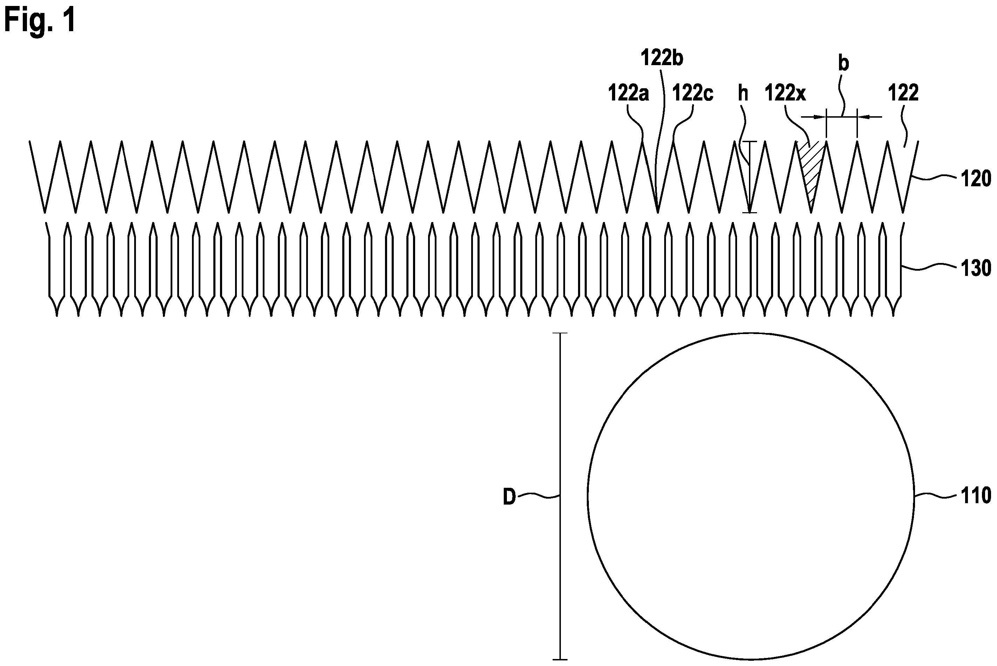

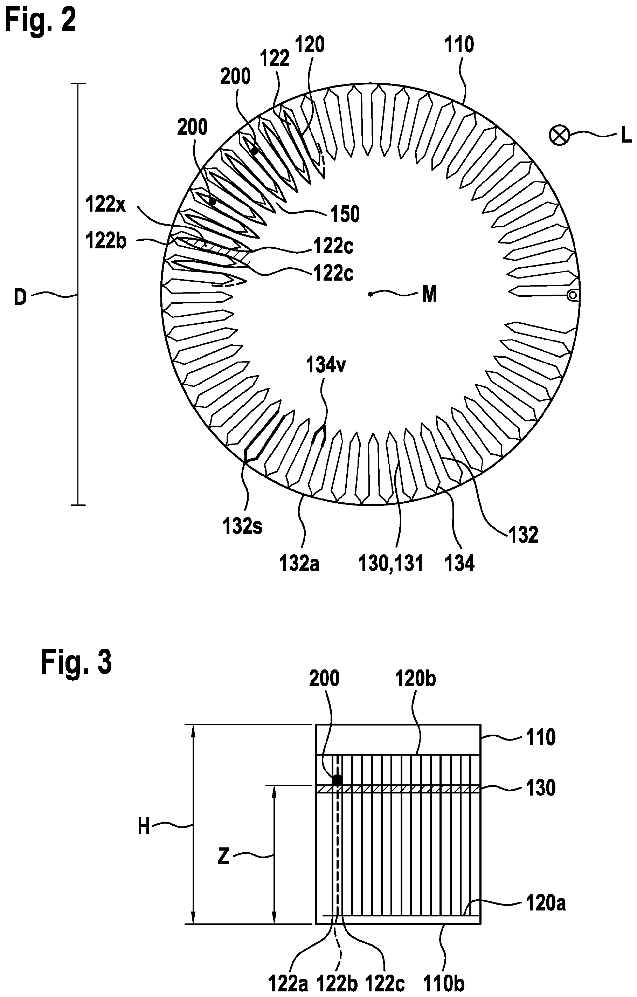

Eine erste bevorzugte Ausführungsform der erfindungsgemäßen Vorrichtung wird anhand der Figuren 1 bis 3 erläutert und ist insgesamt mit 100 bezeichnet (siehe insbesondere Figuren 2 und 3). Diese Vorrichtung 100 weist einen zylinderförmigen oder konischen durchsichtigen Becher 110 mit einem Durchmesser D und einer Höhe H (siehe Figur 3), ein mit einer Vielzahl von Falten 122 ausgebildetes Keimpapier 120, welches eine Unterkante 120a und eine Oberkante 120b definiert, sowie eine mit einer Vielzahl von Schlingen 132 und zwischen den Schlingen vorgesehenen Verbindungsbereichen 134 ausgebildete Halteschiene 130 auf. Die Halteschiene 130 ist insgesamt mäanderförmig ausgebildet. Die Halteschiene ist biegsam bzw. elastisch ausgebildet, so dass sie beispielsweise zur Bereitstellung eines Halterings 131, wie er in Figur 2 dargestellt ist, gebogen werden kann. Die Halteschiene 130 kann aufgrund ihrer Elastizität auch zur Klemmung von Falten und damit zu ihrer eigenen Fixierung an dem Keimpapier verwendet werden, wie weiter unten noch erläutert wird. Die genannten Komponenten sind, vereinzelt und vor ihrem Zusammenbau zu einer erfindungsgemäßen Vorrichtung, in Figur 1 dargestellt.

Wie insbesondere in Figur 1 dargestellt, weist das Keimpapier 120 eine Vielzahl von Falten 122 einer Breite b und einer Höhe h auf, welche jeweils durch drei benachbarte Scharniere 122a, 122b und 122c definiert sind. Der Bereich einer jeweiligen derartigen Falte 122 ist zur Veranschaulichung in den Figuren 1 und 2 schraffiert dargestellt und mit 122x bezeichnet. In der dargestellten, bevorzugten Ausführungsform sind die Scharniere als Knickfalten ausgebildet. Die Knickfalten 122a und 122c stellen hierbei die Scheitel, und Knickfalte 122b den Trog der Falte 122 dar. Die weiteren Falten sind entsprechend ausgebildet bzw. dimensioniert.

Wie insbesondere aus den Figuren 2 und 3 deutlich wird, verlaufen diese Falten 122 bzw. die entsprechenden Knickfalten 122a, 122b und 122c nach Anordnung des Keimpapiers 120 in dem Behälter 110 und bei üblicher Verwendung des Behälters in lotrechter Richtung L, also dem Geotropismus folgend parallel zur Gravitationskraft, bzw. zum Erdmittelpunkt hin. Es sei noch einmal darauf hingewiesen, dass auch eine schräge Orientierung der Knickfalten denkbar ist, die jedoch in den Figuren nicht im Einzelnen dargestellt ist. Bei Verwendung eines zylinderförmigen Bechers verlaufen die Knickfalten typischerweise im Wesentlichen lotrecht, bei Verwendung eines konischen Bechers lotrecht oder leicht schräg zur Lotrechten.

In Figur 2 ist dargestellt, wie die zu dem Halterring 131 gebogene Halteschiene mit dem mit der Vielzahl von Falten 122 ausgebildeten Keimpapier 120 zusammenwirkt. In Figur 2 ist das Keimpapier 120 zu einer Zylinderform gekrümmt und in dem zylinderförmigen Behälter 110 angeordnet. Zur Vereinfachung der Darstellung ist das mit Falten 122 ausgebildete Keimpapier 120 nicht um den gesamten Umfang des Behälters bzw. des Halterings dargestellt.

Es ist auch möglich, das Keimpapier 120 und die Halteschiene in linearer Weise, also nicht zu einer Kreis- bzw. Zylinderform gekrümmt, erfindungsgemäß einzusetzen. Diese Komponenten können beispielsweise zur Bereitstellung einer erfindungsgemäßen Vorrichtung ohne Krümmung in einen entsprechend ausgebildeten, länglichen Behälter eingebracht werden, der hier jedoch nicht im Einzelnen dargestellt ist

Der Haltering 131 ist mäanderförmig ausgebildet ist und weist eine Anzahl von Schlingen 132 auf, welche im Wesentlichen U-förmig ausgebildet sind und deren lichter Abstand innerhalb der Schlinge die Verengung der jeweiligen Falten 122 auf der Zwischenhöhe bestimmt. Zur Veranschaulichung ist eine derartige Schlinge in Figur 2 fett gezeichnet und mit 132s bezeichnet. Zwischen den Schlingen 132 sind jeweils Verbindungsbereiche 134 ausgebildet. Zur Veranschaulichung ist auch ein derartiger Verbindungsbereich in Figur 2 fett gezeichnet und mit 134v bezeichnet Die Dimensionierung der Verbindungsbereiche definiert den Abstand zueinander benachbarter Falten 122 auf der Höhe des Zwischenbereiches. Insgesamt kann der Haltering 131 aufgrund seiner Elastizität und durch die dargestellte Wechselwirkung mit dem Keimpapier rutschfest an dem Keimpapier angebracht bzw. fixiert werden.

In Figur 2 erkennt man insbesondere, dass die Falten 122 zur Mitte M des Behälters hin sich öffnen bzw. offen ausgebildet sind, wobei sie, wie erwähnt, aufgrund der Wechselwirkung mit dem Haltering 131 auf der Zwischenhöhe Z gegenüber darüber- und darunterliegenden Bereichen verengt bzw. tailliert sind. Auf diese Verengung kann Saatgut abgelegt werden, gegebenenfalls bei gleichzeitiger leichter Verklemmung mit der verengten Falte,, wobei sichergestellt ist, dass es aufgrund dieser Verengung nicht nach unten durchrutschen oder herunterfallen kann. Gleichzeitig berührt das Saatgut den Haltering nicht, sondern nur das Keimpapier. Zwei Samen sind zur Veranschaulichung in Figur 2 in einer jeweiligen Falte eingezeichnet und mit 200 bezeichnet.

Es sei darauf hingewiesen, dass die Anbringung der Haltescheine an dem gefalteten Keimpapier zweckmäßigerweise im noch nicht aufgerollten Zustand von Keimpapier120 und Halteschiene 130 durchgeführt wird. Nach Anbringung der Halteschiene130 auf dem Keimpapier 120 kann dann der so bereitgestellte Verbund in einfacher Weise in eine Zylinderform oder eine Konusform gebogen, und anschließend in den Behälter 110 derart eingeführt, dass die nun zu dem Haltering 131 gebogene Halteschiene130 mit den Scheitelpunkten 132a der jeweiligen Schlingen 132 an der Innenwand 110a des Behälters anliegt (siehe Figur 3). Gleichzeitig liegt das Keimpapier mit seiner Unterkante 120a auf dem Boden 110b des Behälters 110 auf, wie in Figur 3 dargestellt. Der Haltering 131 verläuft hierbei auf der Zwischenhöhe Z des Behälters entlang der Innenwand 110a, wie insbesondere in Figur 3 zu sehen ist.

Hierdurch wird, wie insbesondere in Figur 2 dargestellt, eine der Vielzahl der Falten entsprechende Vielzahl von Keimungsbereichen 150 bereitgestellt, welche durch die Seitenwände einer jeweiligen Falte 122 und eine Schlinge des Halterings definiert sind. In jedem dieser Bereiche 150 kann ein Pflanzensamen entsprechender Größe sicher abgelegt werden, wobei ein unerwünschtes Durchfallen oder Abrutschen des Samens aufgrund der durch die Dimensionierung der Schlinge bedingte Verengung der Falte 122 nach unten wirksam vermieden werden kann.

Hierdurch können in einfacher Weise in den jeweiligen Falten 122 bzw. den Bereichen 150 im wesentlichen identische Wachstumsbedingungen für eine Vielzahl von Pflanzensamen bereitgestellt werden.

Hierbei wird insbesondere jede Falte 122 durch die Schlingen 132 bzw. Zähne der Halteschiene 130 bzw. des Halterings 131 auf der Zwischenhöhe Z soweit eingeengt, dass das entsprechende, auf oder etwas oberhalb der Zwischenhöhe Z abgelegte Saatgut nicht nach unten durchrutschen kann, die Falte 122 aber insbesondere oberhalb und unterhalb der Zwischenhöhe so weit geöffnet ist, dass der Samen ungestört keimen und die Keimpflanze sich ungestört entwickeln kann, vor allem aber, dass sich die Wurzel ungehindert nach unten entwickeln kann. Die Breite b der Falten lässt sich also, mit anderen Worten, auf der Zwischenhöhe Z durch eine geeignete Wahl der Halteschiene 130 bzw. des Halteringes 131 variieren.

Die Stärke der Faltenverpressung und damit die Ausgestaltung der Halteschiene 130 bzw. des Halteringes 131 richtet sich nach der Größe des Saatgutes. Die oben dargestellte Ausführungsform unter Verwendung einer Halteschiene erweist sich über einen relativ großen Bereich von Samengrößen bzw. Samendurchmessern als sehr wirksam und zuverlässig. Bei sehr kleinem Saatgut müsste die dargestellte Verengung der Falten durch die Halteschiene 130 bzw. den Haltering 131 sehr ausgeprägt sein, um ein Verrutschen nach unten sicher zu verhindern. Hierdurch kann aber unter Umständen ein zu starker Druck für kleine und entsprechend zarte Pflanzensamen oder Keimpflanzen erzeugt werden, wodurch insgesamt nicht mehr alle Samen die gleichen Keimbedingungen vorfinden würden.

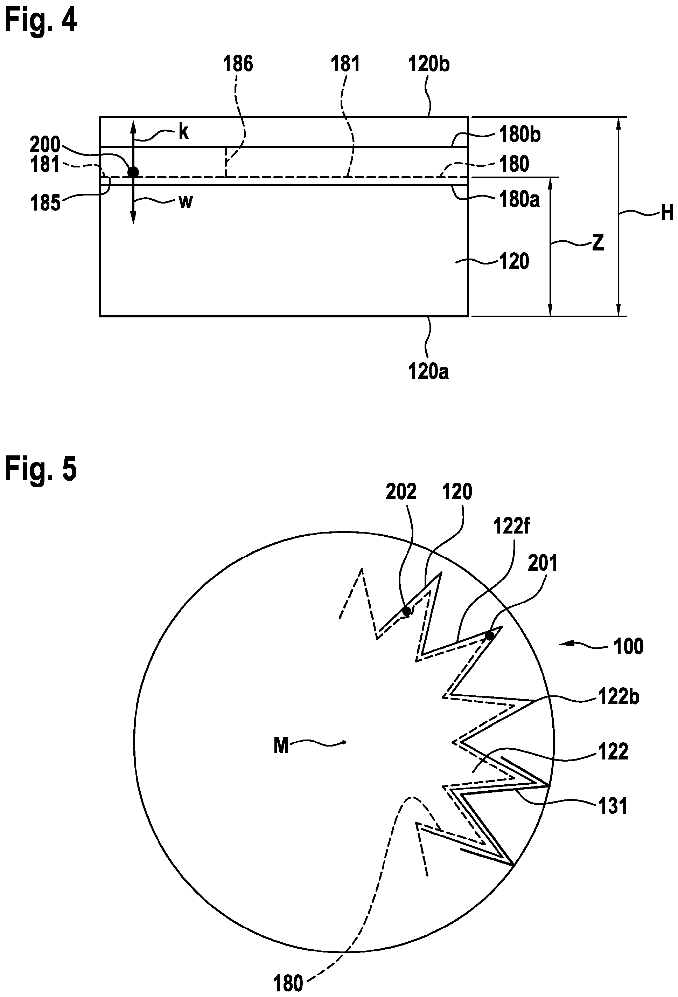

Zur Behebung dieser Problematik stellt die vorliegende Erfindung eine zweite Ausführungsform vor, bei der eine Fixierung auch von sehr kleinem Saatgut ohne starke Faltenverpressung möglich ist. Diese Ausführungsform ist in den Figuren 4 und 5 dargestellt.

Gemäß dieser Ausführungsform ist auf dem Keimpapier 120 ein schmaler Streifen 180 aus einem feinen Vliespapier oder Vliesstoff auf der Zwischenhöhe Z, an der das Saatgut an dem Keimpapier angeordnet werden soll, aufgebracht. Dieser Streifen erstreckt sich zweckmäßigerweise über die gesamte Breite des Keimpapiers 120 parallel zu dessen Oberkante 120b. Der Streifen 180 weist eine Unterkante 180a und eine Oberkante 180b auf. Der Streifen 180 ist an seiner Unterkante 180a mittels voneinander beabstandeter Verbindungsstellen181 an dem Keimpapier 120 fixiert. Die Verbindungsstellen sind bei dieser Ausführungsform im Wesentlichen (bei lotrechter Ausrichtung des Keimpapiers 120) in horizontaler Richtung, also senkrecht zur Gravitationsrichtung, zueinander angeordnet bzw. beabstandet. Diese Fixierung kann beispielsweise durch entsprechendes Aufnähen des Streifens 180 an dem Keimpapier erfolgen. Es sind aber auch Rändelverfahren (sog. Embossing) einsetzbar, bei denen zwei Lagen von Papier, hier also das Keimpapier 120 und das Vliespapier des Streifens 180, durch starke Verprägung ohne Kleber miteinander verbunden werden. Es sei angemerkt, dass derartige Nahten und Rändelungen in besonders einfacher Weise mit Zwischenräumen 185 zwischen den Verbindungsstellen ausgebildet werden können, durch welche aus dem Saatgut sich entwickelnde Wurzeln nach unten, also in Gravitationsrichtung, wachsen können. An seiner Oberkante 180b kann der Streifen entweder gar nicht, oder nur punktuell, beispielsweise jeweils lotrecht oberhalb der Verbindungsstellen 181 der Unterkante, an dem Keimpapier fixiert sein.

Es sei ferner angemerkt, dass derartige Verbindungsstellen, insbesondere Nahten oder Rändelungen, nicht notwendigerweise in horizontaler Richtung angeordnet bzw. verlaufen müssen.

Zwischen dem so an dem Keimpapier fixierten Haltestreifen und dem Keimpapier kann zu untersuchendes Saatgut eingebracht und rutschfest gehalten werden. Aus dem Saatgut sich entwickelnde Wurzeln können durch die zwischen den Verbindungsstellen ausgebildeten Zwischenräume 185 ohne Beeinträchtigung oder Verpressung nach unten wachsen, und Keimlinge entsprechend nach oben.

Insbesondere kann diese Ausgestaltung für sehr kleines Saatgut 200 verwendet werden, wobei sich die Wurzeln nach unten (mittels Pfeil w in Figur 4 veranschaulicht) durch die Zwischenräume zwischen den Verbindungsstellen 181 entwickeln können. Gleichzeitig können aus dem Saatgut 200 entstehende Keimlinge ungehindert nach oben (mittels Pfeil k in Figur 4 dargestellt) aus dem Streifen bzw. den durch diesen bereitgestellten Taschen 185 wachsen. Auch gemäß dieser Ausführungsform ist somit eine Vielzahl von Bereichen geschaffen, welche unterschiedlichen Pflanzensamen identische Wachstumsbedingungen bereitstellen.

Oberhalb der Verbindungsstellen 181 kann eine weitere Fixierung des Streifens 180 an dem Keimpapier vorgesehen sein, beispielsweise in Form lotrecht verlaufender Nähte 186, wie sie in Figur 4 angedeutet sind. Diese können zum Beispiel zu einer stärkeren Separierung benachbarter Keimungsbereiche beitragen.

Das Keimpapier 120 kann bei dieser Ausführungsform in glatter bzw. ungefalteter (siehe Figur 4), oder gefalteter Form vorliegen. Letztere wird nun weiter, insbesondere unter Bezugnahme auf die Figur 5, erläutert:
Hierbei kann zunächst der Streifen 180 auf ein ungefaltetes bzw. ebenes Keimpapier aufgebracht und in der dargestellten Weise an diesem fixiert werden. Anschließend können Keimpapier und Streifen zusammen zur Bereitstellung einer Vielzahl von Falten gefaltet werden. Wie erwähnt kann dieser Verbund aus Keimpapier und Vliespapier in linearer Form, also ohne Biegen erfindungsgemäß verwendet werden. Es ist es jedoch vorteilhaft möglich, den Verbund aus Keimpapier und Vliespapier in eine Zylinderform zu bringen und anschließend in einen entsprechenden zylinderförmigen oder konusförmigen Behälter zu positionieren.

In Figur 5 erkennt man, dass der Haltestreifen 180 (hier gestrichelt dargestellt) bezüglich des Keimpapiers 120 auf der zur Mitte (Mittelpunkt M) des Behälters 110 hin angeordneten Seite angebracht ist. Keimpapier und Haltestreifen sind nicht über den gesamten Umfang des Behälters dargestellt. Da Keimpapier 120 und Haltestreifen 180 gemeinsam zur Bereitstellung der Vielzahl von Falten 122 geknickt werden, ist der Auflagedruck zwischen Keimpapier 120 und Haltestreifen 180 im Bereich der Tröge bzw. Knickfalten 122b typischerweise etwas geringer als entlang den Flanken, hier mit 122f bezeichnet. Bei besonders zartem bzw. kleinem Saatgut erweist es sich als vorteilhaft, dieses im Bereich der Tröge zwischen Keimpapier und Haltestreifen anzuordnen. Zur Veranschaulichung dieser Position ist ein entsprechend angeordneter Samen hier mit 201 bezeichnet. Es ist aber auch möglich, Saatgut an den Flanken zwischen Keimpapier und Haltestreifen zu positionieren. Ein entsprechend angeordneter Samen ist zur Veranschaulichung dargestellt und mit 202 bezeichnet.

Die Ausführungsform gemäß Figur 5 kann gemeinsam mit einem hier nur rein schematisch dargestellten Haltering 131 eingesetzt werden, wodurch eine besonders sichere Fixierung von Saatgut auf der Zwischenhöhe an einem lotrecht ausgerichteten Keimpapier erzielbar ist.

Es sei angemerkt, dass der Streifen 180 von besonderer Feinheit sein kann, um unterhalb der Auflösung einer Röntgendetektion zu liegen, und damit eine automatische Bildauswertung nicht zu behindern. Andererseits kann es zweckmäßig sein, für den Streifen 180 ein stärkeres Vliespapier mit einer stärkeren Feuchtigkeitsaufnahmefähigkeit zu verwenden, wodurch insgesamt mehr Feuchtigkeit auf der Zwischenhöhe bzw. dem Ablagehorizont des Saatguts bereitgestellt werden kann. Es kann andererseits mittels eines derartigen Streifens auch ein gewollter, standardisierter mechanischer Stress auf das Saatgut erzeugt werden, um die Triebkraft des Saatguts zu untersuchen.

Die Erfindung kann auch in weiteren, nicht im Einzelnen in den Figuren dargestellten Ausführungsformen realisiert werden. Beispielsweise können zwei lotrecht oder schräg ausgerichtete Keimpapiere parallel oder konzentrisch mit einem bestimmten Abstand zueinander angeordnet sein, wobei diese dann jeweils eine Oberkante und eine Unterkante definieren. Diese relative Lage bzw. dieser Abstand zueinander kann auf einer Zwischenhöhe, beispielsweise einige cm unter der Oberkante, auf einer Zwischenhöhe durch entsprechende rahmenförmige Profile, z.B. entsprechende Schienen oder Ringe, verengt werden , wodurch auf dieser Zwischenhöhe durch Einbringen von zwei parallel zueinander angeordneten Bögen aus Keimpapier in das rahmenförmige Profil ein taillierter Bereich zur Verfügung gestellt ist, auf dem Saatgut, nur unter Berührung des Keimpapiers und unter Vermeidung einer Berührung des rahmenförmigen Profils, sicher positioniert werden kann, wobei aus dem Saatgut sich entwickelnde Keimlinge ohne Beeinträchtigung nach oben, und Wurzeln durch den verengten Bereich hindurch nach unten, also in Gravitationsrichtung, wachsen können. Im Falle zweier konzentrischer Keimpapiere ist beispielsweise ein innerer Ring innerhalb des konzentrisch inneren, und ein äußerer Ring außerhalb des konzentrisch äußeren Keimpapiers vorgesehen. Der Abstand der beiden Ringe, zusammen mit den entsprechenden Dicken der zwischen die Ringe eingebrachten Bögen von Keimpapier, definiert die Breite eines Bereiches, in dem Saatgut angeordnet bzw. abgelegt werden kann. Der Abstand der Ringe kann ferner auch den Grad einer Papierverpressung unterhalb der Saatgutablagehöhe, also der Zwischenhöhe, definieren, und kann in Anpassung an die Größe des Saatguts und/oder die Dicke der hieraus sich entwickelnden Keimwurzel gewählt werden. Auch hier kann im Fall sehr kleinen Saatguts eine weitere Fixierung des Saatguts durch eine Tasche aus einem feinen Streifen eines dünnen Vliesmaterials das Saatgut am Durchrutschen hindern, ohne hierbei die Keimung zu beeinträchtigen. Die Ringe sind bei dieser Ausgestaltung zweckmäßigerweise glatt, d.h. ohne eine Mäanderstruktur ausgebildet.

Es ist gleichfalls denkbar, die beiden lotrecht oder schräg ausgerichteten Keimpapiere mit Falten auszubilden. In diesem Fall sind die Schienen bzw. Ringe zweckmäßigerweise mäanderförmig mit einer Vielzahl von Schlingen ausgebildet, wobei wiederum die Anzahl der Schlingen der Anzahl der Falten entspricht.

Die parallele Anordnung der Keimpapiere kann insbesondere dann vorteilhaft eingesetzt werden, wenn lediglich eine visuelle Beurteilung des Saatguts, und keine Beurteilung des Saatguts mit bildgebenden Verfahren, insbesondere unter Verwendung der 3D- Computertomographie, beabsichtigt ist.

Sämtliche Ausführungsformen zeichnen sich dadurch aus, dass die Berührungsbereiche zwischen Saatgut und Keimpapier maximiert sind, so dass im Keimpapier bereitgestellte Feuchtigkeit zur Gewährleistung eines optimalen Wachstums von Keimlingen aus dem Saatgut auf das Saatgut übertragen werden kann.

## Patentansprüche

1. Vorrichtung zum Anordnen von Saatgut mit
• einem Behälter (110) mit einer Behälterwand, die eine Oberkante und eine Unterkante mit einem lotrechten Abstand (H) zueinander aufweist,
• einem sich entlang der Innenseite der Behälterwand erstreckenden Keimpapier (120), welches eine Unterkante (120a) und eine Oberkante (120b) aufweist, und
• einer Trageeinrichtung (130;180), welche derart mit dem Keimpapier zusammenwirkt, dass das Saatgut auf oder oberhalb einer Zwischenhöhe oberhalb der Unterkante und unterhalb der Oberkante der Behälterwand an dem Keimpapier derart getragen wird, dass Keime des Saatguts nach oben, und Wurzeln des Saatguts nach unten wachsen können,
wobei die Trageeinrichtung einen sich auf der Zwischenhöhe erstreckenden Haltestreifen (180) aufweist, welcher schmaler ist als das Keimpapier (120) und eine Oberkante (180b) und eine Unterkante (180a) aufweist, wobei der Haltestreifen (180), insbesondere an seiner Unterkante (180a), an zueinander beabstandeten Verbindungsstellen mit dem Keimpapier verbunden ist, und/oder, wobei die Trageeinrichtung eine auf der Zwischenhöhe ausgebildete Halteschiene (130) aufweist.

2. Vorrichtung nach Anspruch 1, bei der der Behälter (110) zylinderförmig oder konusförmig oder polygonal, insbesondere viereckig, ausgebildet ist.

3. Vorrichtung nach Anspruch 1 oder 2, wobei das Keimpapier (120) eine Vielzahl von lotrecht oder schräg sich erstreckenden Falten (122) aufweist.

4. Vorrichtung nacheinem der vorstehenden Ansprüche, bei der die Halteschiene (130) biegsam und/oder mäanderförmig mit einer Vielzahl von Schlingen (132) und zwischen den jeweiligen Schlingen vorgesehenen Verbindungsbereichen (134) ausgebildet ist.

5. Vorrichtung nach einem der vorstehenden Ansprüche, bei der die Anzahl der Falten des Keimpapiers der Anzahl der Schlingen der Haltescheine entspricht.

6. Verfahren zum Anordnen von Saatgut an einem Keimpapier, welches sich entlang einer Behälterwand eines Behälters (110) erstreckt, mit folgenden Schritten:
• Lotrechtem oder schrägem Ausrichten des Keimpapiers (120), Anordnen des Saatguts (200) oberhalb einer Unterkante (120a) und unterhalb einer Oberkante (120b) des Keimpapiers unter Verwendung einer Trageeinrichtung (130;180), welche derart mit dem Keimpapier zusammenwirkt, dass das Saatgut auf oder oberhalb einer Zwischenhöhe oberhalb der Unterkante und unterhalb der Oberkante der Behälterwand an dem Keimpapier (120) derart getragen wird, dass Keime des Saatguts nach oben, und Wurzeln des Saatguts nach unten wachsen können,
wobei die Trageeinrichtung einen sich auf der Zwischenhöhe erstreckenden Haltestreifen (180) aufweist, welcher schmaler ist als das Keimpapier (120) und eine Oberkante (180b) und eine Unterkante (180a) aufweist, wobei der Haltestreifen, insbesondere an seiner Unterkante (180a), an zueinander beabstandeten Verbindungsstellen (181) unter Bereitstellung von zur Unterkante (120a) des Keimpapiers hin offenen Zwischenräumen mit dem Keimpapier (120) verbunden ist, und/oder,
wobei die Trageeinrichtung eine auf der Zwischenhöhe ausgebildete Halteschiene (130) aufweist, und das Anordnen unter Verwendung der sich entlang dem Keimpapier (120) auf der Zwischenhöhe ersteckenden Halteschiene (130) bewerkstelligt wird.

7. Verfahren nach Anspruch 6, bei dem die Halteschiene (130) biegsam ausgebildet ist.

8. Verfahren nach einem der Ansprüche 6 oder 7, bei dem die Halteschiene mäanderförmig ausgebildet ist.

9. Verfahren nach einem der vorstehenden Ansprüche 6 bis 8, bei dem das Keimpapier eine Anzahl von lotrecht oder schräg sich erstreckenden Falten (122) aufweist.

10. Verfahren nach einem der vorstehenden Ansprüche 6 bis 9, bei dem das Keimpapier zusammen mit dem Haltestreifen und/oder der Halteschiene in eine zylindrische oder konische Form gebogen wird und in einem zylinderförmigen oder konusförmigen Behälter (110) angeordnet wird.

## Claims

1. Device for arranging seeds comprising
• a container (110) with a container wall having an upper edge and a lower edge at a perpendicular distance (H) from each other,
• a germination paper (120) extending along the inside of the container wall, which has a lower edge (120a) and an upper edge (120b), and
• a support device (130;180) co-operating with the germination paper such that the seed is supported on the germination paper at or above an intermediate height above the lower edge and below the upper edge of the container wall such that germs of the seed can grow upwards and roots of the seed can grow downwards,
wherein the support device has a holding strip (180) extending at the intermediate height, which is narrower than the germination paper (120) and has an upper edge (180b) and a lower edge (180a), wherein the holding strip (180), in particular at its lower edge (180a), is connected to the germination paper at mutually spaced joints, and/or,
wherein the support device comprises a support rail (130) formed at the intermediate height.

2. Device according to claim 1, in which the container (110) is cylindrical or conical or polygonal, in particular quadrangular.

3. Device according to claim 1 or 2, wherein the seed paper (120) comprises a plurality of vertically or obliquely extending folds (122).

4. Device according to any one of the preceding claims, wherein the support rail (130) is formed to be flexible and/or meander-shaped with a plurality of loops (132) and connecting regions (134) provided between the respective loops.

5. Device according to any one of the preceding claims, wherein the number of folds of the seed paper corresponds to the number of loops of the support rail.

6. A method of arranging seeds on a seed paper extending along a container wall of a container (110), comprising the following steps:
• Aligning the seed paper (120) vertically or at an angle,
• arranging the seed (200) above a lower edge (120a) and below an upper edge (120b) of the germination paper using a support device (130; 180) which co-operates with the germination paper in such a way that the seed is supported on the germination paper (120) at or above an intermediate height above the lower edge and below the upper edge of the container wall in such a way that germs of the seed can grow upwards and roots of the seed can grow downwards
wherein the support device comprises a holding strip (180) extending at the intermediate height, which is narrower than the germination paper (120) and has an upper edge (180b) and a lower edge (180a), wherein the holding strip, in particular at its lower edge (180a), is connected to the germination paper (120) at spaced-apart connection points (181), providing intermediate spaces open towards the lower edge (120a) of the germination paper, and/or,
wherein the support device comprises a support rail (130) formed at the intermediate height, and the arrangement is effected using the support rail (130) extending along the germination paper (120) at the intermediate height.

7. Method according to claim 6, wherein the support rail (130) is formed to be flexible.

8. Method according to one of claims 6 or 7, wherein the support rail is meander-shaped.

9. Method according to any one of the preceding claims 6 to 8, wherein the seed paper comprises a number of perpendicularly or obliquely extending folds (122).

10. Method according to any one of the preceding claims 6 to 9, wherein the seed paper together with the holding strip and/or the support rail is bent into a cylindrical or conical shape and is arranged in a cylindrical or conical container (110).

## Revendications

1. Dispositif pour disposer des semences comprenant
• un récipient (110) avec une paroi de récipient qui présente un bord supérieur et un bord inférieur avec une distance perpendiculaire (H) entre eux,
• un papier à germer (120) s'étendant le long de la face intérieure de la paroi du récipient, qui présente un bord inférieur (120a) et un bord supérieur (120b), et
• un dispositif de support (130 ; 180) qui coopère avec le papier germinateur de telle sorte que la semence est supportée sur le papier germinateur à ou au-dessus d'une hauteur intermédiaire au-dessus du bord inférieur et au-dessous du bord supérieur de la paroi du récipient, de telle sorte que les germes de la semence peuvent pousser vers le haut et les racines de la semence vers le bas,
le dispositif de support présentant une bande de maintien (180) s'étendant sur la hauteur intermédiaire, laquelle est plus étroite que le papier germinal (120) et présente un bord supérieur (180b) et un bord inférieur (180a), la bande de maintien (180) étant reliée au papier germinal, en particulier sur son bord inférieur (180a), en des points de liaison espacés les uns des autres, et/ou,
le dispositif de support présentant un rail de maintien (130) formé à la hauteur intermédiaire.

2. Dispositif selon la revendication 1, dans lequel le récipient (110) est de forme cylindrique ou conique ou polygonale, en particulier quadrangulaire.

3. Dispositif selon la revendication 1 ou 2, dans lequel le papier à germer (120) présente une pluralité de plis (122) s'étendant perpendiculairement ou obliquement.

4. Dispositif selon l'une des revendications précédentes, dans lequel le rail de maintien (130) est flexible et/ou en forme de méandres avec une pluralité de boucles (132) et des zones de liaison (134) prévues entre les boucles respectives.

5. Dispositif selon l'une quelconque des revendications précédentes, dans lequel le nombre de plis du papier germé correspond au nombre de boucles de la barre de maintien.

6. Procédé pour disposer des semences sur un papier germe qui s'étend le long d'une paroi de récipient d'un récipient (110), comprenant les étapes suivantes :
• Alignement vertical ou oblique du papier germé (120),
• disposer la semence (200) au-dessus d'un bord inférieur (120a) et au-dessous d'un bord supérieur (120b) du papier à germes en utilisant un dispositif de support (130 ; 180) qui coopère avec le papier à germes de telle sorte que la semence est portée sur le papier à germes (120) à ou au-dessus d'une hauteur intermédiaire au-dessus du bord inférieur et au-dessous du bord supérieur de la paroi du récipient de telle sorte que les germes de la semence peuvent pousser vers le haut et les racines de la semence vers le bas
le dispositif de support présentant une bande de maintien (180) s'étendant sur la hauteur intermédiaire, laquelle est plus étroite que le papier à germes (120) et présente un bord supérieur (180b) et un bord inférieur (180a), la bande de maintien étant reliée au papier à germes (120), en particulier au niveau de son bord inférieur (180a), en des points de liaison (181) espacés les uns des autres, en ménageant des espaces intermédiaires ouverts en direction du bord inférieur (120a) du papier à germes, et/ou,
le dispositif de support présentant un rail de maintien (130) formé sur la hauteur intermédiaire, et l'agencement étant réalisé en utilisant le rail de maintien (130) s'étendant le long du papier germé (120) sur la hauteur intermédiaire.

7. Procédé selon la revendication 6, dans lequel le rail de maintien (130) est flexible.

8. Procédé selon l'une des revendications 6 ou 7, dans lequel le rail de maintien est réalisé en forme de méandres.

9. Procédé selon l'une quelconque des revendications 6 à 8 ci-dessus, dans lequel le papier germé comporte un certain nombre de plis (122) s'étendant verticalement ou obliquement.

10. Procédé selon l'une quelconque des revendications 6 à 9 ci-dessus, dans lequel le papier germé est plié avec la bande de retenue et/ou la barre de retenue en une forme cylindrique ou conique et est placé dans un récipient cylindrique ou conique (110).
